# EUROPEAN PATENT APPLICATION

(11) **EP 4 597 205 A1**
(43) Date of publication of application: **06.08.2025**
(21) Application number: 24155847.7
(22) Date of filing: 05.02.2024
(51) Int. Cl.: G02B 27/01, H04N 23/00, H04N 23/70, H04N 23/55

(54) **CAMERA ARRANGEMENT FOR VEHICLES**

(71) Applicant: Einride Autonomous Technologies AB, 111 56 Stockholm (SE)
(72) Inventor: SKARP, Erik, 111 56 Stockholm (SE); HELLSTRÖM, Patrik, 111 56 Stockholm (SE)
(74) Representative: Laine IP Oy

(57) **Abstract**

According to an example aspect of the present invention, there is provided an apparatus for use in a vehicle, comprising at least one processing core and at least one memory storing instructions that, when executed by the at least one processing core, cause the apparatus at least to send control information to control an at least in part transparent screen placed, or configured to be placed, at least in part in a field of view of a video sensor element of the vehicle, select an area of the screen which encompasses a part, or all of the screen, and determine the control information so that the screen, when acting on the control information, transmits light through parts of the screen not comprised in the selected area and blocks or distorts light passing through the selected area toward the video sensor element.

## Description

### FIELD

The present disclosure relates to modifying a light field provided to a camera sensor.

### BACKGROUND

Vehicles may be provided with cameras, such as video cameras, which comprise at least a video sensor element and optics suitable for feeding light into the video sensor element. For example, a car may have installed therein cameras to assist a driver in parking or alerting the driver of obstacles or pedestrians along a predicted route of the car.

When a vehicle, such as a car, for example, is configured to drive itself at least in part autonomously, or where the vehicle, such as the car, is configured to be driven remotely over a data connection, video data may be used to provide the remote driver or autonomous driving software with situational awareness of the car and its surroundings.

### SUMMARY

According to some aspects, there is provided the subject-matter of the independent claims. Some embodiments are defined in the dependent claims.

According to a first aspect of the present disclosure, there is provided an apparatus for use in a vehicle, comprising at least one processing core and at least one memory storing instructions that, when executed by the at least one processing core, cause the apparatus at least to send control information to control an at least in part transparent screen placed, or configured to be placed, at least in part in a field of view of a video sensor element of the vehicle, select an area of the screen which encompasses a part, or all of the screen, and determine the control information so that the screen, when acting on the control information, transmits light through parts of the screen not comprised in the selected area and blocks or distorts light passing through the selected area toward the video sensor element.

According to a second aspect of the present disclosure, there is provided a method in a vehicle, comprising sending control information to control an at least in part transparent screen placed, or configured to be placed, at least in part in a field of view of a video sensor element of the vehicle, selecting an area of the screen which encompasses a part, or all, of the screen, and determining the control information so that the screen, when acting on the control information, transmits light through parts of the screen not comprised in the selected area and blocks or distorts light passing through the selected area toward the video sensor element.

According to a third aspect of the present disclosure, there is provided a non-transitory computer readable medium having stored thereon a set of computer readable instructions that, when executed by at least one processor, cause an apparatus for a vehicle to at least send control information to control an at least in part transparent screen placed, or configured to be placed, at least in part in a field of view of a video sensor element of a vehicle, select an area of the screen which encompasses a part, or all, of the screen, and determine the control information so that the screen, when acting on the control information, transmits light through parts of the screen not comprised in the selected area and blocks or distorts light passing through the selected area toward the video sensor element.

### BRIEF DESCRIPTION OF THE DRAWINGS

FIGURE 1A illustrates an example system in accordance with at least some embodiments of the present invention;
FIGURE 1B illustrates an example system in accordance with at least some embodiments of the present invention;
FIGURE 2A illustrates a use case in accordance with at least some embodiments of the present invention;
FIGURE 2B illustrates a use case in accordance with at least some embodiments of the present invention;
FIGURE 2C illustrates a use case in accordance with at least some embodiments of the present invention;
FIGURE 2D illustrates a curved screen in accordance with at least some embodiments of the present invention;
FIGURE 3 illustrates an example apparatus capable of supporting at least some embodiments of the present invention, and
FIGURE 4 is a flow graph of a method in accordance with at least some embodiments of the present invention.

### EMBODIMENTS

Herein are disclosed systems and methods wherein a transparent screen is operated in front of a video sensor element. This screen may be operated to block certain light from reaching the sensor and/or to provide visual input to the video sensor element. For example, bright lights may be blocked from saturating the video sensor element, a synchronization indication may be provided into a sensor feed produced by the video sensor element and/or a heads-up display may be provided using the screen to provide into the sensor feed vehicular information. As a further option, the screen may be configured to display, for imaging by the video sensor element, indicators of predetermined sizes and/or shapes to enable an operator or software module to characterize a quality level of the sensor feed produced by the video sensor element. Thus use of a video sensor element in an autonomous or remotely operated vehicle is enhanced, improving driving safety of the autonomous or remotely operated vehicle.

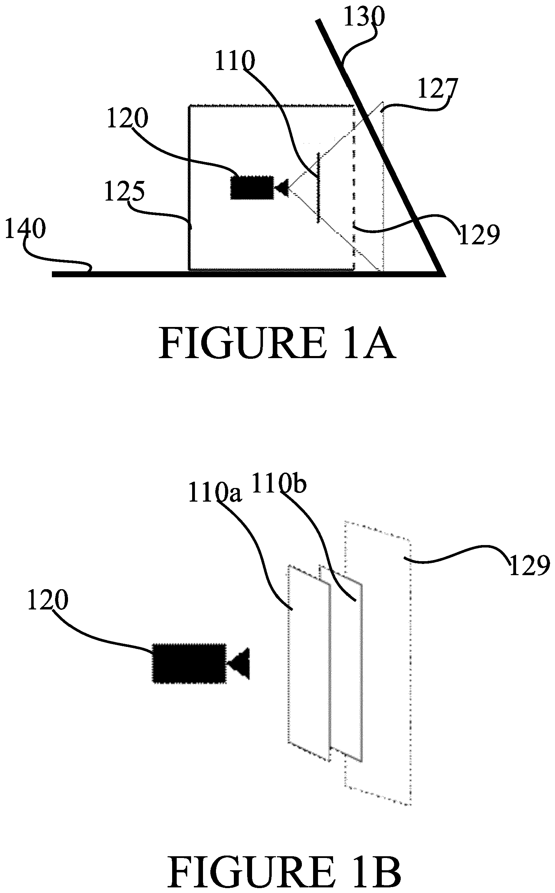

FIGURE 1A illustrates an example system in accordance with at least some embodiments of the present invention. The illustrated system forms part of an autonomous or remotely operated vehicle. By autonomous vehicle it is herein meant a vehicle that may drive itself without a human driver onboard, or a vehicle that may drive itself with a human driver onboard, who does not need to generate control inputs for the vehicle during driving. The control inputs, such as steering, are in the autonomous vehicle generated using software running on a suitable computing substrate which is comprised in the vehicle. A remotely operated vehicle is a vehicle configured to receive its control inputs from outside the vehicle, for example from a human driver located outside the vehicle and not co-moving with the vehicle. As an alternative to the human remote driver, the control inputs to be provided to the remotely operated vehicle may be generated using software running on a computing substrate which is external to the vehicle, connected to the vehicle using a communication connection. The communication connection may be a wireless connection, for example, to enable the vehicle to roam in a large operating range.

In the system of FIGURE 1A, video sensor element 120 is located in housing 125, which is on a dashboard 140 of an autonomous or remotely operated vehicle. Windscreen 130 of the vehicle is transparent, and the housing 125 comprises a transparent side 129, to enable a field of view 127 of video sensor element 120 to include a view of the world outside the vehicle. In the field of view 127 of video sensor element 120 is located screen 110. Screen 110 may cover field of view 127 in whole or in part only. Screen 110 is a transparent screen, by which it is meant that video sensor element 120 may image a view outside the vehicle through windscreen 130, transparent side 129 of housing 125 and screen 110. Screen 110 may be transparent without screen 110 being completely transparent. A video sensor element is an example of a camera sensor, and some embodiments of the invention operate using a camera sensor.

Of note is that in some embodiments, housing 125 may be outside windscreen 130, in which case transparent side 129 protects video sensor element 120 from dust, rain and other elements which may be present outside windscreen 130.

In some embodiments, the system may be used with a vehicle that does not comprise a conventional dashboard. The system may be used with a vehicle that does not comprise a windshield. The system may be used with a vehicle that does not comprise a driver's cab.

The system may be located anywhere on a vehicle. The system may be located at a front of a vehicle. A front of a vehicle may be a side of a vehicle facing forwards when travelling in a forwards direction, that is, not in reverse gear. The system may be located at a rear of a vehicle. A rear of a vehicle may be a side of a vehicle facing rearwards when travelling in a forwards direction, that is, not in reverse gear. The system may be located on one or more lateral sides of a vehicle. A lateral side may be a lateral side of a vehicle travelling in a forwards direction. Multiple such systems may be placed on one or more sides of a vehicle.

For example, the system may be placed in a centred position of a front of the vehicle. This can give the video sensor a good view of the travelling direction. The system may be placed at a lateral and/or longitudinal edge of a front of a vehicle. The system may be placed at the front of the vehicle, facing ahead of the vehicle and offset from the centre of the front of the vehicle. This can give the video sensor a better view of the surroundings of the vehicle. This placement can be advantageous especially when using multiple video sensors.

The system can be placed anywhere on a front of a vehicle. This is especially useful for applications where the vehicle does not comprise a conventional driver's cab or a windshield, as the video sensor and system may be placed at optimal positions. An optimal position may be a position that provides the widest or longest view of the surroundings. An optimal position may be a position that provides the most detailed view of the surroundings. An optimal position may be a position that provides the most detailed view of people in the surroundings. An optimal position may be a position that provides the most detailed view of other vehicles in the surroundings.

Similarly, the system may be placed anywhere on any of the sides of a vehicle.

The system may include a housing that does not comprise a transparent side. The corresponding side may be left open to enable a view from inside the housing. In some embodiments, the transparent screen may be configured to cover and protect the video sensor.

Screen 110 is configurable using control information, such that a selected area of the screen 110 may be activated to block or distort light passing through the selected area of screen 110 toward the video sensor element 120. Alternatively or in addition, the selected area may generate light of its own. The selected area may encompass a part, but not necessarily all, of an active surface of screen 110. The control information may be generated in a computing substrate and provided to screen 110 using a suitable data connection. For example, the control information may be generated in a same computing substrate as is used to run self-driving software of an autonomous vehicle. Indeed, the self-driving software itself may generate the control information, which is beneficial for reasons which will be described herein below. Different types of screen 110 will be described herein below.

FIGURE 1B illustrates an example system in accordance with at least some embodiments of the present invention. Like numbering denotes like structure as in FIGURE 1A. FIGURE 1B provides more detail on the structure of screen 110, which is in the example of FIGURE 1B built of at least two layers, organic light-emitting diode, OLED, layer 110a and LCD layer 110b. Layers 110a and 110b may be in either order, in other words, layer 110b may be nearer video sensor element 120 rather than layer 110a.

Screen 110 may be configured to generate light in the selected area, to block light from passing through the selected area, and/or to blur light which passes through the selected area. In some embodiments, screen 110 is configured to generate light of plural colours in the selected area, to enable providing multi-colour indications to video sensor element 120. In general, video sensor element 120 may provide its video data into a video sensor feed of video sensor element 120, this sensor feed being encoded using a suitable video encoding codec. Examples of video encoding codecs include MPEG-4 and VVC/H.266.

Herein will be described plural functions screen 110 may be used for. In each of the functions, an apparatus controlling screen 110 is configured to determine control information so that the screen, when acting on the control information, activates a part of its pixels to block light, blur light and/or display various indications.

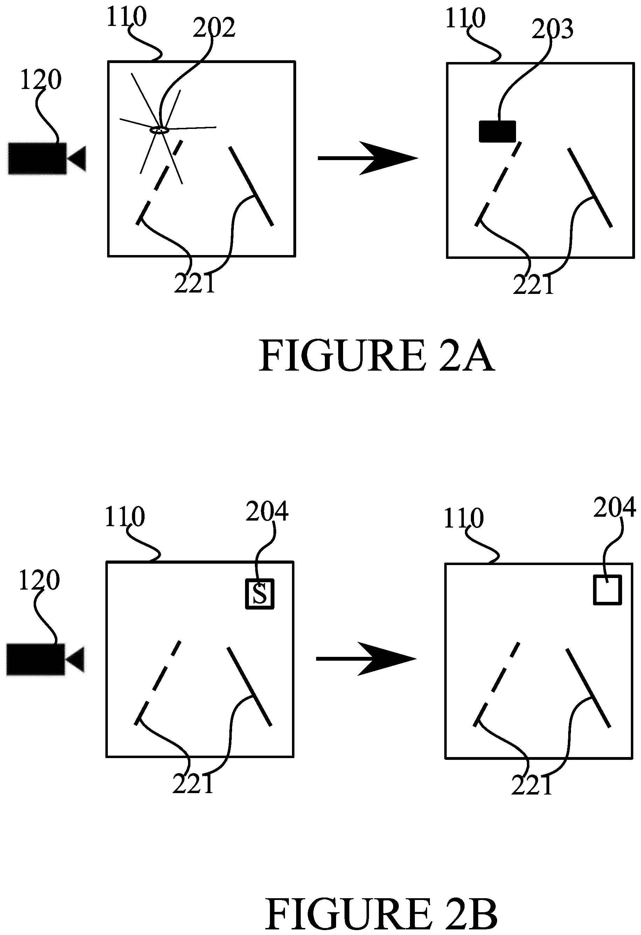

FIGURE 2A illustrates a use case in accordance with at least some embodiments of the present invention. On the left is illustrated schematically an example situation, where video sensor element 120 images a road scene through screen 110. The road scene includes lane markings 221, which self-driving software or a remote driver may use to maintain the vehicle in the correct lane. However, in this scene a bright light source 202 has the effect that a sensor feed produced by video sensor element 120 is degraded in quality as less dynamic range is available to represent lane markings 221 and other important visual cues. This has the effect that safety is reduced, since the useful quality of the sensor feed is reduced. The system may be configured to respond to the situation on the left by selecting, as on the right-hand part of FIGURE 2A, an area 203 of screen 110 to activate. In this example, selected area 203 of screen 110 merely blocks light behind it, which in this case includes light from source 202. As the video sensor element is thus not burdened by light from bright source 202, more dynamic range in the sensor feed is available to render land markings 221 and other important objects in the view, and safety of the vehicle is enhanced.

As bright source 202 may correspond to a car approaching on an adjacent lane, it will move along the surface of screen 110 in a predictable manner, enabling updating of the selected area 203 to continue blocking the light. Bright source 202 may alternatively to headlights of a car be transient, such as a reflection of sunlight from a puddle of water or oil. The system overall may be configured to detect bright light sources in a sensor feed from video sensor element 120 and to responsively select an area from screen 110 which will block the bright light source.

To track a bright light source, an apparatus may be configured to monitor brightness changes around the edges of selected area 203 in the sensor feed produced by video sensor element 120. An increase in brightness near an edge of selected area 203 may prompt the apparatus to move selected area 203 toward this direction where the increased brightness is detected, or to expand selected area 203 to cover also the area where increased brightness is detected. Alternatively or in addition, a second video sensor element, with a field of view which does not include screen 110, may be used to keep track of movement of bright light sources, to enable keeping selected area 203 on screen 110 such that it blocks the bright light source from illuminating video sensor element 120.

In some embodiments, selected area 203 does not entirely block, but attenuates, light passing through it. In these embodiments, screen 110 can be used as a filter to lower the brightness/exposure to better match the native, or optimal, ISO or exposure settings for video sensor element 120. Furthermore, if video sensor element 120has dual-native ISO or multiple native ISOs, for example for day-time driving and night-time driving, then the filter can be used, for example, to match the higher ISO used for night-time driving when it is starting to get dark but the higher native ISO is not best yet but using the filter together with high ISO setting is better than not using the filter with low ISO setting.

In some embodiments where screen 110 is used to block bright light sources, transparent screen 110 is curved rather than planar, in particular it may have a concave shape which makes tracking of bright light sources with selected areas 203 easier. In some embodiments where screen 110 is used to block bright light sources, the apparatus controlling screen 110 is configured to select an extent of attenuation selected area 203 will have based on a brightness of the bright light source that selected area 203 is to block. This enables seeing the bright light source in the sensor feed of video sensor element 120 also when selected area 203 is active on screen 110, which makes tracking it easy based on the sensor feed itself. Further, the bright light source may then be used as input to a self-driving software, for example, while maintaining high dynamic range in the sensor feed for lane markings 221 and other important objects in the view. Blocking bright lights, or other objects, may be considered a first function of screen 110. The system may be configured to block more than one bright light at the same time, using more than one selected area 203, the more than one selected area 203 not necessarily contiguous with each other.

The self-driving software of an autonomous vehicle generates control inputs to implement steering of the vehicle, and thus the self-driving software will know the vehicle will turn before the vehicle in fact turns. Thus the self-driving software may update the selection of the area of display 110 to activate to maintain the selected area between bright light source(s) and the video sensor element 120 based at least in part on a steering input of the vehicle. This offers enhanced performance of blocking the bright light(s) compared to detecting a turn already in progress.

FIGURE 2B illustrates a use case in accordance with at least some embodiments of the present invention. In embodiments according to FIGURE 2B, a synchronization symbol 204 is provided on screen 110, which may blink on and off. This signal may be used by a remote driver to control a latency of the sensor feed of video sensor element 120, in particular a remote driving station may be configured to extract synchronization symbol 204 from the sensor feed, and to check that its blinking sequence matched with a preconfigured sequence the remote driving station has. In case the synchronization symbol 204 in the sensor feed is out of sync with the preconfigured sequence, a conclusion may be drawn that the sensor feed suffers from delays and a warning may be provided by the remote driving station to the remote driver who may then, for example, switch the sensor feed to an alternative signal carrier, or control the vehicle to a safe stop.

Synchronization symbol 204 may be a blinking black symbol which does not emit light of its own, or it may be a light-emitting symbol. When the symbol does not emit light, it provides the benefit that it does not impair visibility of video sensor element 120. Placement of the synchronization symbol on screen 110 may be adjusted depending on the situation so as not to disturb the operator in a specific area of the sensor feed, and/or the symbol may be alternating in shape, enhancing its usability in determining a lag associated with the sensor feed of video sensor element 120.

Compared to a mechanical synchronization indicator, such as a blinking light in a vehicle, mechanical element will cover a field of view of video sensor element 120 even when turned off. The mechanical element would also fixed in place, and other mechanical means of indicator, such as synchronized use of wipers, would likely have a fixed pattern. The screen 110 would be able to be reconfigured so as to not obscure anything when off or not displaying an indicator, as well as allowing the indicator to be moved around the field of view, either by an operator or by a control unit. Screen 110 could also, in some embodiments, be used to protect video sensor element 120 from the elements. In some embodiments screen 110 may cover only a minor part, such as less than 10%, of the field of view of video sensor element 120. In these embodiments, the screen 110 could be used to convey a synchronization indicator and provide an unobstructed view when the synchronization indicator is not provided, since screen 110 is transparent.

In some embodiments, the synchronization symbol 204 takes the form of a nonce, determined from operating parameters of the vehicle. A remote driving station may be configured to extract the nonce and determine whether it is consistent with the operating parameters, and in response to the nonce not being consistent with the operating parameters, provide an alert to the remote driver of the inconsistency. Such an inconsistency may be due to a delay in the sensor feed, for example, which endangers the remote driving solution. Alternatively to a nonce, the remotely operated vehicle may include in operating parameters it transmits to the remote driving station, an indication of a current state of synchronization symbol 204. The remote driving station may be configured to extract the indication and determine whether it is consistent with the displayed synchronization symbol 204, and in response to the indication not being consistent with the synchronization symbol, provide an alert to the remote driver of the inconsistency. When the indication is consistent with the synchronization symbol, or the nonce with the operating parameters, the remote driving station may simply allow the remote driving session to continue. Providing synchronization symbol 204 may be considered a second function of screen 110.

A third use of screen 110 is in the provision of a heads-up display, HUD. Screen 110 may be used to present vehicular information, such as speed, remaining fuel or charge, or route information, for example as a response to a determination, by the vehicle or a remote driving station, that there are problems with telemetry or the remote operation station. In cases where video feed is successfully transmitted but other sensor data cannot be successfully conveyed, the sensor data could be displayed on screen 110 to convey them to a remote driving station. Further, screen 110 may be used to highlight areas of importance in the sensor feed of video sensor element 120 even if telemetry is sent normally. For example, pedestrians in the field of view of video sensor element 120 may be provided a visual indication to enhance their visibility to a remote driver. This augmented-reality type of sensor feed is useful in remote operation or monitoring of vehicles or other systems, where large amounts of data and/or different types of data may be needed to be transmitted at the same time.

The HUD-function may be used to block and/or blur a person's face to protect their privacy. While anonymizing a person's face may be done by processing the image data in the vehicle before it is sent to the remote operator station and displayed to the remote operator or stored, it still requires a person's face to be registered by the camera. Using a suitable tracking technique, such as image recognition and/or Lidar, transparent screen 110 may physically obscure a person's face from being recorded by video sensor element 120. A person whose face would be clear enough to require censoring would likely be noticed in advance, for example if they are walking towards the vehicle or the vehicle is approaching a crossing. This would therefore reduce the need for post-processing of image data before sending it from the vehicle to the remote station or storage location, further decreasing latency.

A fourth use of screen 110 is in the provision of a video sensor stream quality indicator on screen 110. Displaying one or more indicators of predetermined sizes and/or shapes can give a remote driver or remote driving station an indication of video quality of the video sensor feed of video sensor element 120. The video quality may be determined by comparing the quality indicator in the sensor feed to information of what the quality indicator should be like, and the larger is the divergence between the two, the lower is the video quality. For example, in darker areas or empty scenes, it might be otherwise difficult to detect that a quality of video being streamed has deteriorated. The screen may present an indicator that is clearly visible to the remote driving station, or remote driver. For example, two parallel bars (either illuminated using an OLED or similar, or formed by blocked light) can be displayed with a predetermined distance between them. If the operator cannot distinguish between the two parallel bars, then the video quality has deteriorated as the bars start bleeding into each other. Different distances can be used to determine the "visibility" of the camera feed, which in turn could be used to control image recognition or other methods that use the streamed video, for example remotely from the vehicle. Another example of a usable quality indicator is a V-shape or Y-shape, where the operator or some image recognition software, or a pixel evaluation, can determine where the lines separate and where they blend into each other. Such function can be imagined as a kind of Snellen chart at an optician.

The fourth function may also be used to find a minimum suitable video stream quality when there is limited bandwidth and other data items need to be transmitted, or they are requested to be transmitted if possible. For example, the remote operator or some other supervision mechanism can provide feedback to the system when the video quality reaches a lower threshold based at least on the quality indicator. The visibility of the indicator will not be (as) affected by the environment, especially when used together with a light-blocking screen, wherefore this would be a dependable and consistent way of checking video quality and adjusting the bandwidth allotted to the video sensor feed. The indicator may also be used to check contrast, color banding and other video compression artifacts.

The fourth function may also be used as a way to determine color accuracy of the video feed, or rather, if colors appear as they should. For example, if the light is very yellow, then this may affect the visibility of objects in the field of view of video sensor element 120. Running the screen in a specific color, or just a specific black or tone of gray, this can be used to determine color shift/tint of the image, as well as be used to correct white balance. Enhancing the image quality of the sensor feed improves safety of the autonomous or remotely driven vehicle.

The first function, blocking bright light sources, may require that screen 110 is able to block or darken incoming light. The second, third and fourth functions do not require the incoming light to be darkened, since these functions only need to be able to display information, for example using a transparent OLED. This means that the screen does not need to be able to darken light in all described embodiments.

The second, third and fourth functions can be combined with a light-blocking screen, either as one single screen performing the first function and the second, third and/or fourth function. For example a transparent LCD may be configured to flash one or more symbols in a corner thereof in a periodic manner, blur or otherwise obscure people's faces or display a video quality indicator, or as two separate screens placed consecutively in the field of view of video sensor element 120, where the light-blocking screen provides the first function and also creates a dark background for the information-displaying screen to better perform the second, third and/or fourth functions. A light-blocking screen alone is capable of performing all four functions. A merely light-emitting screen is able to perform at least the second, third and fourth functions.

An example of a light-blocking screen is a transparent LCD screen, or more generally a liquid crystal based screen. Such a screen may have a binary state for its pixels, these being each configurably in an open, light-transmitting mode to closed. Such a screen may have variable polarization and/or shading. A further example of a light-blocking screen is an electronic, electro-optical or electromechanical screen or some other kind of screen allowing polarization or blocking of light. Mechanical shutters are a further example of a device usable as a light-blocking screen, as is a metamaterial or intelligent surface capable of controlling electromagnetic waves in the camera-visible spectrum.

A light-blocking screen may be configured to block individual pixels or contiguous groups of pixels. Using contiguous groups of pixels enables controlling of shading in an expedited manner, and e.g. rectangular blocks of pixels which block light sources need not be updated as often as light-blocking pixel groups which are exactly matched to the apparent size of the light source.

The apparatus controlling the light-blocking function may be configured to never block critical parts of the field of view so as to obstruct information needed to safely drive the vehicle, such as directly ahead. In other words, a part of the field of view directly ahead may be classified as a no-block part which may only be blocked to a minor, predetermined degree. When screen 110 has configurable polarization, this feature may be used to control a brightness of reflections and glares while transmitting information on objects to video sensor element 120.

An amount or complexity of bright light blocking may be dynamically adjusted based on how fast the system is able to accurately block bright lights without hindering the speed of the vehicle. If the vehicle drives at a relatively high speed, the light detection and blocking system based on light-blocking screen 110 may operate in a coarse and fast manner - either more or less extensive simple shading depending on safety factors or operator commands. This feature may be coupled to the other functions. If the processing will take too long such that it would increase latency over a certain threshold, then the level of detail in the bright-light blocking using screen 110 can be reduced as a response.

For the synchronization symbol of HUD screen function, these being the second and third functions described above, screen 110 may be any light-blocking screen described above. Since shading or darkening can be controlled, it is possible to create a rhythmically changing effect of blocked light somewhere on the screen, or to display numbers, text or anything else. Further, for the second and third functions, screen 110 may be an OLED, electroluminescent display, or other light-emitting screen. While light-emitting screens may not be capable of blocking light, they can provide a visible indication in front of the camera for video sensor element 120 to image in to its sensor feed. Enhanced visibility for a light-emitting screen may be provided by a light-blocking screen behind it, however a light-emitting screen may be used also as a stand-alone screen. A light-emitting screen may be able to provide more detailed information as a HUD than the light-blocking screen.

An illuminated screen, for example generated using a small projecting element may also be used with the second and third functions. The projecting element may be laser-based, for example similar to rifle red dot sights and holographic sights. In these cases, the synchronization symbol and HUD information elements can be moved anywhere on the screen. For example, an operator or an automated algorithm may move the synchronization symbol that is ticking, or the HUD information elements, to somewhere on the display that is less busy and not essential to driving, such as right ahead.

Visibility of synchronization symbols and HUD information elements may be affected by a focus range of video sensor element 120 and distance between video sensor element 120 and screen 110. A larger depth of focus and video sensor element 120 may be able to focus close to the lens. A distance between video sensor element 120 and screen 110 may be dependent on required level of clarity. This distance may be fixed or configurable, for example. Synchronization symbols and HUD information elements may be calibrated to be visible, or readable, in the sensor feed of video sensor element 120 even if slightly out of focus. A synchronization indicator is not as much affected by minimum focus distance as HUD information elements. Screen 110 may be within depth of field or beyond a minimum focus distance. Screen 110 may be outside a depth of field or below a minimum focus distance of video sensor element 120.

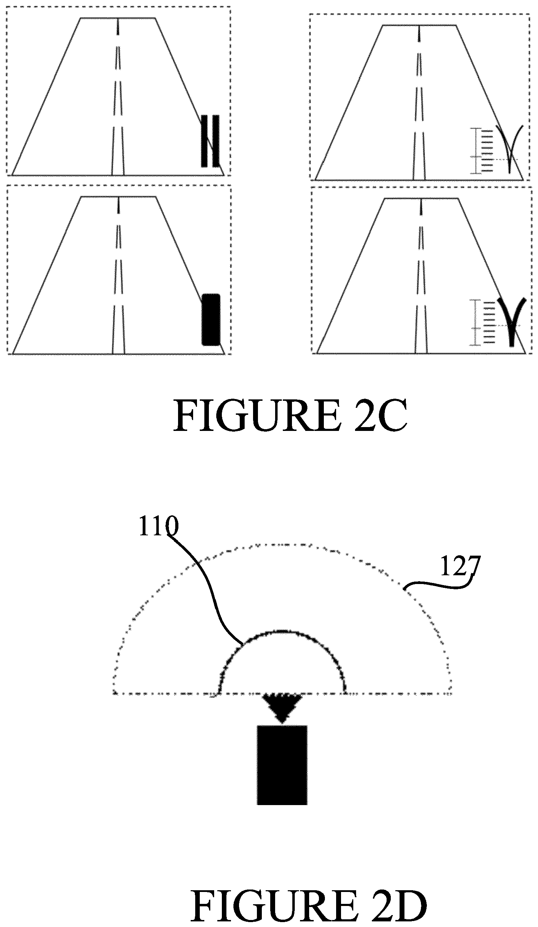

FIGURE 2C illustrates a use case in accordance with at least some embodiments of the present invention. In detail, this figure relates to the fourth function, the quality indicator. Four example images are provided, the top row being images with good quality and the bottom row being images with degraded video quality. On the left, screen 110 displays two vertical bars which are rendered into the lower right corner of a video sensor feed of video sensor element 120. When video quality degrades, for example due to connection issues, these vertical bars bleed into each other visually as an artefact of how many video codecs behave in adverse circumstances.

On the right, a quality indicator is provided in the shape of the letter v, wherein in adverse communication circumstances the arms of the letter v visually connect with each other higher up than in the case of good video quality. The reason for this merging is the afore-mentioned bleeding together of nearby elements, caused by video codecs in adverse conditions. The height at which the arms of the letter v visually connect with each other in the video sensor feed may be used as a metric of video quality, with a threshold height being predetermined to define video quality which is sufficient. An alert may be provided automatically to a user, such as a remote driver, in case the height at which the arms of the letter v visually connect with each other in the video sensor feed crosses the threshold.

Concerning again the first function of screen 1, detecting and tracking bright lights, this function may be camera sensor-based wherein light values are detected, analysed and bright spots are determined. The camera sensor may be video sensor element 120 or another camera, as described herein above. An image recognition algorithm may be used to detect bright light sources and, optionally or alternatively, objects which disappear from view in the sensor feed due to a bright light source. In some embodiments, the bright-light blocking function of screen 110 may be used together with Lidar and other sensors, for example if lidar still sees a lamp post or a moving vehicle, which are known to be associated with bright lights. Lamp posts can be tracked. Bright headlights from a meeting vehicle can also be blocked, and the blocking can be dynamically updated to follow the headlights, if the meeting vehicle is tracked. Screen 110 may be configured to dim bright lights by applying the blocking feature at some, but not all, frames of video sensor element 120. Examples include 1 frame per second, and 25 frames of a total of 30 frames per second.

From the operator side, this can be presented as a black frame or use frame interpolation to not annoy the operator. Thus the operator may be protected from being shown a frame with bright lights every now and then.

As described above, edges around a bright light blocking element getting brighter indicates the light source moving towards that edge, and darkening ones indicate that the light source is moving away from the edge. This can be used by an apparatus controlling screen 110 to track the bright light.

Unblocking some, but not all, of the "pixels" in the blocked area, similar to the unblocking part mentioned above, may be performed to unblock pixels within the blocked area to check, if bright lights remain behind the overall blocked area. If this check reveals that bright light no longer is behind the unblocked pixels, pixels adjacent to the unblocked ones may also be unblocked to dynamically adjust the blocked area. This is beneficial as it enables maintaining a smaller blocked area.

A secondary camera, which may be a still camera or video camera, may be used to track bright light sources. This may be a simple camera that can measure exposure/light values or some related characteristic. The main camera, video sensor element 120, may require safety rating and redundancy controls, whereas the secondary camera would not require this as it is used merely to track bright light sources. The secondary camera is not blocked by screen 110 and thus will always have an unblocked view. The blocked area may be selected based at least in part on information from the secondary camera.

In some embodiments, light is split, using suitable light guides, to both video sensor element 120 and the secondary camera before hitting reaching light-blocking screen 110 to avoid skewing and/or to ensure that the images seen by the cameras are the same.

To select the area to activate in screen 110, an operator may mark an area that should be blocked or shaded. Blocking may be needed for unexpected situations such as oil spills or water on the window/screen that the camera does not detect. The selection may be entered as request for an area to be blocked, and screen 110 may block at least the marked area and optionally a larger area which includes the marked area. The operator may move a blocked area or lock it for a predetermined period of time. This could be useful in slow traffic or steady driving on a long and empty road, if the operator deems the camera system to be too "jittery" and wants to have a stable image with fewer moving elements.

In some embodiments, a stereo camera arrangement is used, where the secondary camera may be used to be able to see behind blocked areas on screen 110, if there is enough distance between the two cameras.

One or more of the screens 110, or sub-screens of screen 110, may be integrated with a window covering the camera module or housing. This provides the benefit that fewer parts take individual space. Installation of components in vehicle is relatively easy. Further, this provides better tolerances for distance between lens, screen and window, as there are fewer separate components and the window can be tightly secured. The screen 110 may be placed between window and camera lens. An installation of integrating screen 110 with the window would not require tight tolerances for calibration purposes, as this is only necessary for the lens-screen distance, which will be protected by the window.

In some embodiments, a large part, such as most of the windscreen, of the front of the vehicle is transparent and formed by a transparent screen. Such a display front may be used to provide indicators to the outside as well, for example for service personnel.

In some embodiments, screen 110 is placed between camera sensor of video sensor element 120 and a lens of the video camera element. As discussed herein above, screen 110 may be curved. Cameras with a wide field of view, such as 120° or 180°, may benefit from a curved screen. Since the field of view is fixed or known, the screen can be configured to match it in shape. Screen 110 may be curved in both top-view and/or side-view to match field of view and distortion of camera. One benefit of a curved screen is that the screen can smaller while still covering the entire field of view. Another benefit of a curved screen is that calibration is easier as screen curvature can match how the light is received by the camera.

FIGURE 2D illustrates a curved screen in accordance with at least some embodiments of the present invention. Like numbering denotes like structure as in FIGURE 1A.

Video sensor element 120, screen(s) 110 and window 129 may be provided as separate components. Alternatively, video sensor element 120 + screen(s) 110 may be provided as a module and window 129 separately. Providing components as a module provides the benefit of ease of installation compared to distinct components.

Video sensor element 120 may be integrated in the vehicle or installed in a way that requires tighter tolerances, screen(s) 110 and window 129 may be installed as a simple replaceable kit. Yet further, video sensor element 120, screen(s) 110 and window 129 may be provided as a single module. A new module that is already calibrated can be installed on the spot.

Safety features of the screen 110 may include a circuit breaker configured to to turn screen 110 off if it is faulty, in particular if it blocks visibility of video sensor element 120. A software module may be configured to determine, from the sensor feed of video sensor element 120 that screen 110 has entered a fault state where it blocks visibility and is no longer configurable. As a response to this determination, the software module, comprised for example in the apparatus configured to control screen 110, is configured to trigger the circuit breaker to clear screen 110. In these embodiments screen 110 is transparent in the off-state, wherefore shutting off the power supply to it renders it clear and transparent.

A second safety feature present in at least some embodiments, is censoring, blurring or otherwise obscuring peoples' faces. This feature blocks faces from even getting registered in the sensor feed of video sensor element 120. This serves to meet requirements in e.g. general data protection regulation, GDPR, and other legal requirements, as well as simply reducing the extent to which identifiable material of persons is registered and disseminated. Blocking or blurring faces at screen 110, before video sensor element 120, reduces the need for image analysis before sending video to remote station or a database.

Subsequent image analysis may still be conducted to check if there is a face or other personal identifier(s) in the sensor feed, but this check can exclude the parts of the image where the image is already blocked and/or where e.g. lidar data indicates there is are objects. This subsequent analysis may useful for face detection in mirror surfaces and such that were not caught by the screen 110 function, which might have a relatively high threshold for what to consider a face to block since the blocks reduce visibility needed to drive the vehicle.

In its simplest form face blurring just consists of blocking or covering the face or identifier with a black or blurring form on screen 110. Blocking does not need to include fully darkening a specific area, but could rather display on screen 110 something that makes the face or identifier unidentifiable. Faces may be tracked based on Lidar data as well (objects detected and deemed to be persons will likely have a face at the top), or any other type of object tracking, also to determine likely movement and heading - tracking will be even easier when covering slightly more than the face.

For example, a person can be detected by a Lidar system and represented as a polygon or another shape or cluster of data points. Polygons will be used to further exemplify this function, but it should be understood that the principles explained apply to other clustering and object identification mechanisms. In one embodiment, the whole polygon is blurred or blocked. This can make it very computationally simple to block and track a person. In another embodiment, the upper half of a polygon can be blurred or blocked. In another embodiment, the top quarter can be blurred or blocked. In another embodiment, a portion of the polygon corresponding to a face or a head can be blurred or blocked. The size of the portion to blur or block may be dependent on the size and height of the polygon. This is because children generally have different proportions of head to height than adults do.

Face tracking, or head tracking, or tracking the direction of movement of a person, can be beneficial as it may thus be predicted if the person needs to be blurred or not.

More advanced systems can project display a generic stand-in face or other face symbol obscuring the face, or there could be different face icons for children, adults, the elderly, disabled persons, pregnant women, and so on, to still provide the operator with proper situational awareness. A reason for this can be that an adult man will likely cross a street faster than an elderly man; a child is more likely to behave in an unexpected manner such as running into the street compared with an adult; someone approaching the vehicle with an angry or distressed face might indicate an accident or some problem. Therefore, an icon can be placed which is representative of an attribute of the image being obscured. Alternatively, generic icon or blurring effect can be used.

Blocking may be done in a manner that visually does not disturb the operator - for example just flashing on/off for a second in one place and then another can break the operator's attention. This can be remedied with certain timers of blocking, different faces, covering slightly larger areas, etc. If blocking faces with screen 110 would lead to a safety risk in some situations, for example where there are many faces in one place and blocking with the screen would severely reduce the operators ability to gauge the environment, the screen can shut off the face-blocking function and leave this to the image analysis software of the vehicle before sending it to the operator. This might require more computing power from the vehicle and also reduce the possible top speed as the latency might be higher. However, it is possible that the vehicle will already be in a slow-driving situation, for example in a busy street with lots of pedestrians around in the first place.

Bodies can be detected before the faces are visible or clearly distinguishable. The face blocking or blurring may be used together with Lidar, for example a Lidar that detects objects that are classified as potential humans, which guide the image analysis where it should focus its efforts. The face blocking or blurring may be used together with positioning, for example GPS or some other location system indicating that the vehicle is approaching a crossing or a busy street. Certain areas of the image may have more focused/aggressive face-scanning such as to the sides of the road or at the crossing itself.

One connection between anonymizing capabilities and autonomous/remote vehicles is that faster processing times leads to lower latency, which leads to an increased possible speed. Similarly, depending on the vehicle speed and/or the relative speed of objects, as detected by image analysis and/or Lidar, radar or other data, it may not even be necessary to blur images - an autonomous vehicle travelling at 70 km/h might not need to blur out the face of a cyclist going in the opposite direction as their face would not even be clearly visible due to lateral distance and/or relative speed (can be affected by framerate too).

The vehicle may be configured to run test scenarios where it uses the face or identifier detection method used in blocking identifiers or faces without actually blocking them, and then comparing the expected blocking with a more thorough analysis made on the same images with a more time-consuming process (can still be in the vehicle before transmission), and updating the blocking identifier detection algorithm/method based on the comparison.

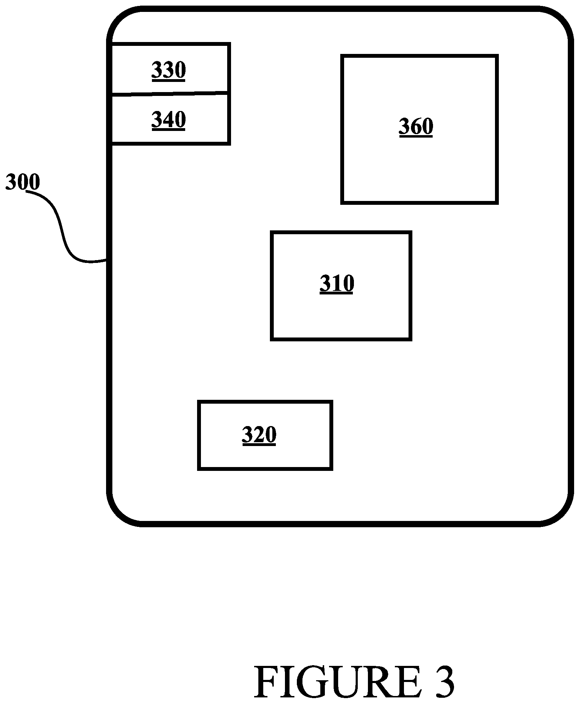

FIGURE 3 illustrates an example apparatus capable of supporting at least some embodiments of the present invention. Illustrated is device 300, which may comprise, for example, an apparatus configured to control screen 110. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300 such as sending, selecting and determining. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions, such as controlling . Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with a communication protocol. Transmitter 330 may comprise more than one transmitter. Receiver 340 may comprise more than one receiver. Transmitter 330 and/or receiver 340 may be configured to operate in accordance with a suitable communication protocol..

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure parameters of operation of screen 110.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340, and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

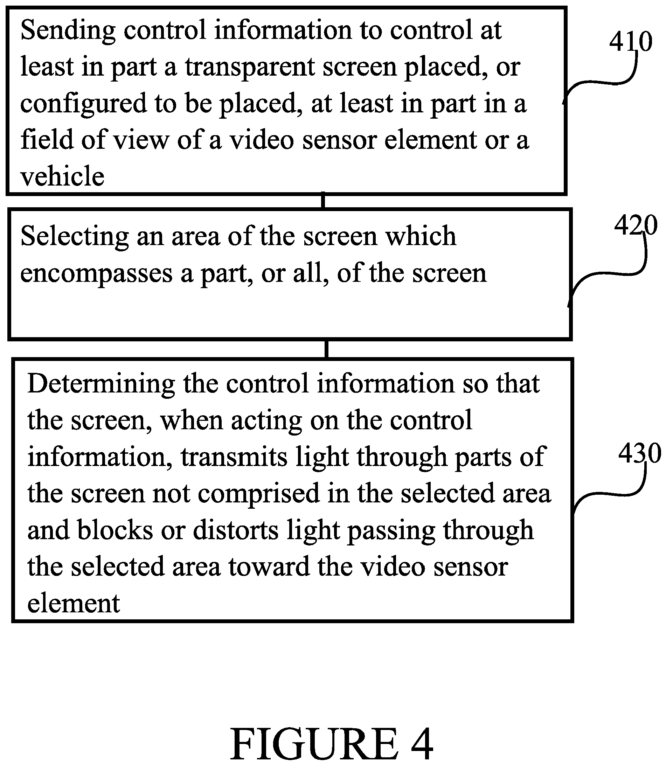

FIGURE 4 is a flow graph of a method in accordance with at least some embodiments of the present invention. The phases of the illustrated method may be performed in device 330, or a remote driving station, for example.

Phase 410 comprises sending control information to control an at least in part transparent screen placed, or configured to be placed, at least in part in a field of view of a video sensor element of a vehicle. Phase 420 comprises selecting an area of the screen which encompasses a part, or all, of the screen. Finally, phase 430 comprises determining the control information so that the screen, when acting on the control information, transmits light through parts of the screen not comprised in the selected area and blocks or distorts light passing through the selected area toward the video sensor element.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some embodiments of the present invention find industrial application in vehicular applications.

### TECHNICAL CLAUSES:

Clause 1. A camera sensor arrangement for use on a vehicle comprising:
- a camera sensor,
- a screen arranged at least partially in the field of view of the camera sensor, the screen being capable of both letting light through to the camera sensor and configurable to obscure light from reaching portions of the camera sensor,
- at least one processing core and at least one memory storing instructions that are configured to,
   - identify a light source to be obscured from a portion of the camera sensor,
   - determine pixels on the screen to modify in order to obscure the light source from the portion of the camera sensor,
   - control the screen to modify the determined pixels to obscure the light source from the portion of the camera sensor.

Clause 2: The camera sensor arrangement according to Clause 1, wherein the at least one processing core and the at least one memory storing the instructions are further configured to determine a characteristic of each of the determined pixels to modify in order to produce an obscuring effect. This effect could be blocking, blurring, changing colour or polarization and/or another characteristic of the light. The effect could be different for different pixels. For example, when blocking the sun, the pixels in the middle of the sun could be completely blocked by modifying those pixels to block out the light as best as possible (i.e. the least transparent). Going farther out from the centre, the pixels may let through some light, or only some pixels in an area are blocked completely and others are not in a grid or pattern. This could improve or reduce the halo affect around light sources without needing to block a bigger area.

Clause 3: The camera sensor arrangement according to Clause 1 or 2, wherein the at least one processing core and the at least one memory storing the instructions are further configured to follow the light source and perform an updated determination of pixels on the screen to modify. This may include predicting the light source movement, or following by moving the determined pixel group as a whole in a certain direction on the screen so that the whole identify / determine processing doesn't need to be done in each frame.

Clause 4: The camera sensor arrangement according to any of Clauses 1-3, wherein the at least one processing core and the at least one memory storing the instructions are further configured to find a minimum number of pixels and/or a boundary to be affected so that a maximal amount of light is allowed to reach the camera sensor while achieving a desired obscuring effect of the light source.

Clause 5: The camera sensor arrangement according to any of Clauses 1-4, wherein the at least one processing core and the at least one memory storing the instructions are further configured to use the camera sensor to identify the light source to be obscured. For example, it could alternate between a number of frames with the obscure feature turned on and off. So, say one in 1 frames there is a frame capture from the sensor with no obscuring which is then used to identify the light sources. The frequency here could be optimized so that to the naked eye, there are no disturbances. It could also be that these frames are omitted from the video output of the sensor. It could also be that the camera itself uses a trial /error algorithm and/or machine learning in order to dynamically adjust the area of the affected pixels by reducing / increasing / moving until ideal parameters are met for light reaching the camera sensor. For example, it could adjust the affected area(s) until no part of the camera sensor is over/under exposed.

### ACRONYMS LIST

- GDPR: general data protection regulation
- HUD: heads-up display
- OLED: organic light emitting diode
- LED: light emitting diode
- MPEG: moving picture experts group
- VVC: versatile video coding

### REFERENCE SIGNS LIST

| | |
|---|---|
| 110 | screen (transparent screen) |
| 110a, 110b | layers or sub-screens of screen 110 |
| 120 | video sensor element |
| 125 | housing |
| 127 | field of view of screen 110 |
| 129 | transparent side of housing 127 |
| 130 | windscreen |
| 140 | dashboard |
| 202 | bright light source |
| 203 | selected area |
| 204 | synchronization symbol |
| 221 | lane markings |
| 300 - 360 | structure of the device of FIGURE 3 |
| 410 - 430 | phases of the method of FIGURE 4 |

## Claims

1. An apparatus for use in a vehicle, comprising;
- at least one processing core and at least one memory storing instructions that, when executed by the at least one processing core, cause the apparatus at least to:
- send control information to control an at least in part transparent screen placed, or configured to be placed, at least in part in a field of view of a video sensor element of the vehicle;
- select an area of the screen which encompasses a part, or all of the screen, and
- determine the control information so that the screen, when acting on the control information, transmits light through parts of the screen not comprised in the selected area and blocks or distorts light passing through the selected area toward the video sensor element.

2. The apparatus according to claim 1, wherein the screen is capable of blocking light from passing through the screen in a configurable manner, and/or wherein the screen is capable of emitting light in the configurable manner.

3. The apparatus according to claim 1 or 2, wherein the apparatus is configured to receive a video feed from the video sensor element or a second video sensor element, and to perform the selecting of the area based at least in part on the video feed.

4. The apparatus according to claim 3, further configured to detect, based on the video feed, at least one bright light source in the video feed, and to select the area of the screen such that the selected area blocks the bright light source from the video sensor element.

5. The apparatus according to claim 4, further configured to update the selection of the area to maintain the area between the bright light source and the video sensor element.

6. The apparatus according to claim 5, further configured to update the selection of the area to maintain the area between the bright light source and the video sensor element based at least in part on a planned movement of the vehicle or a detected movement of the vehicle.

7. The apparatus according to any of claims 1 - 6, configured to determine the control information such that the screen, when acting on the control information, adjusts a light sensitivity of a field of view of the video sensor element.

8. The apparatus according to any of claims 1 - 7, configured to determine the control information such that the screen, when acting on the control information, displays one or more indicators visible to the video sensor element.

9. The apparatus according to claim 8, configured to determine the control information such that the screen, when acting on the control information, displays a predetermined indicator sequence.

10. The apparatus according to any of claims 8 - 9, configured to determine the control information such that the screen, when acting on the control information, displays an indicator of an operating parameter of the vehicle.

11. The apparatus according to any of claims 1 - 10, configured to determine the control information such that the screen, when acting on the control information, obscures identifiable information of a person in a field of view of the video sensor element.

12. The apparatus according to any of claims 1 - 11, wherein the vehicle is an autonomous vehicle.

13. The apparatus according to any of claims 1 - 11, wherein the vehicle is a remotely operated vehicle.

14. A method in a vehicle, comprising:
- sending control information to control an at least in part transparent screen placed, or configured to be placed, at least in part in a field of view of a video sensor element of the vehicle;
- selecting an area of the screen which encompasses a part, or all, of the screen, and
- determining the control information so that the screen, when acting on the control information, transmits light through parts of the screen not comprised in the selected area and blocks or distorts light passing through the selected area toward the video sensor element.

15. A non-transitory computer readable medium having stored thereon a set of computer readable instructions that, when executed by at least one processor, cause an apparatus for a vehicle to at least:
- send control information to control an at least in part transparent screen placed, or configured to be placed, at least in part in a field of view of a video sensor element of a vehicle;
- select an area of the screen which encompasses a part, or all, of the screen, and
- determine the control information so that the screen, when acting on the control information, transmits light through parts of the screen not comprised in the selected area and blocks or distorts light passing through the selected area toward the video sensor element.
